# EUROPEAN PATENT APPLICATION

(11) **EP 4 606 657 A1**
(43) Date of publication of application: **27.08.2025**
(21) Application number: 23897244.2
(22) Date of filing: 27.09.2023
(51) Int. Cl.: B60R 22/185, A44B 11/26

(54) **LOCKING TONGUE**

(30) Priority: 28.11.2022 JP 2022189071
(71) Applicant: Autoliv Development AB, 44783 Vargarda (SE)
(72) Inventor: KONO, Yosuke, Yokohama-shi, Kanagawa 222-8580 (JP); HOSOYA, Kotaro, Yokohama-shi, Kanagawa 222-8580 (JP); UEHARA, Den, Yokohama-shi, Kanagawa 222-8580 (JP)
(74) Representative: Müller Verweyen
(86) International application number: PCT/JP2023/035173
(87) International publication number: WO 2024/116585

(57) **Abstract**

The locking tongue of the present invention includes: a tongue body having a first insertion hole and a second insertion hole for inserting a webbing, and a tongue plate for detachably connecting to a buckle; a locking component that is supported so as to be displaceable between a release position, which allows movement of the webbing away from the first insertion hole, and a lock position, which prevents movement of the webbing approaching the first insertion hole; and a guide piece attached to the locking component that restricts a position through which the webbing passes relative to the locking component. In accordance with the locking tongue having such a configuration, the guide piece regulates the position through which the webbing passes, thereby making it possible to avoid contact between the webbing and the inner wall of the tongue body.

## Description

### TECHNICAL FIELD

The present invention relates to a locking tongue that is fastened in a detachable manner to the buckle of a seatbelt device.

### BACKGROUND ART

In vehicles such as automobiles, a three-point seatbelt device for protecting occupants is known. The three-point seatbelt device protects the occupant seated in a seat via webbing across the chest and waist when the locking tongue is properly attached to the buckle. Specifically, during a collision, the webbing is constrained by a locking mechanism to prevent unwinding, thereby restraining and protecting the occupant in the seat. As a locking tongue equipped with such a locking mechanism, one is known in which a locking component is displaced within the tongue body to place the inserted webbing in either a released state or a locked state (for example, see, Patent Document 1).

### PRIOR ART LITERATURE

### PATENT DOCUMENTS

Patent Document 1: WO 2013/099590

### SUMMARY OF INVENTION

### PROBLEM TO BE SOLVED BY INVENTION

In situations where the locking tongue is attached to and detached from the buckle each time the occupant enters the vehicle, the webbing is often pulled in an oblique direction relative to the tongue body. When the webbing is pulled in an oblique direction relative to the locking tongue body, the webbing may slide over the locking component and become skewed, causing it to be pressed against an unintended portion of the tongue body, which can lead to fraying of the webbing fibers due to friction. Such fraying may, for example, cause the front surface to change to a mottled white appearance, thereby impairing the aesthetic appearance.

The present invention has been made to solve such problems and aims to provide a locking tongue in which the webbing passing through the tongue body, even when drawn in an oblique direction, does not cause the webbing front surface to become rough due to friction with the inner wall of the tongue body.

### MEANS FOR SOLVING PROBLEM

The locking tongue in a specific embodiment of the present invention includes: a tongue body having a first insertion hole and a second insertion hole for inserting a webbing, and a tongue plate for detachably connecting to a buckle; a locking component that is supported so as to be displaceable between a release position, which allows movement of the webbing away from the first insertion hole, and a lock position, which prevents movement of the webbing approaching the first insertion hole; and a guide piece attached to the locking member to limit a position through which the webbing passes relative to the locking member.

### EFFECT OF INVENTION

According to the present invention, a locking tongue can be provided in which the webbing passing through the tongue body, even when drawn in an oblique direction, does not cause the webbing front surface to become rough due to friction with the inner wall of the tongue body.

### BRIEF DESCRIPTION OF DRAWINGS

[FIG. 1] A perspective view schematically illustrating the seatbelt device in the present embodiment.
[FIG. 2] A perspective view illustrating how the locking tongue is connected to the buckle.
[FIG. 3] Afront perspective view and a rear perspective view of the locking tongue.
[FIG. 4] An exploded perspective view of the main components of the locking tongue.
[FIG. 5] Afront perspective view and a rear perspective view of the guide piece.
[FIG. 6] A cross-sectional view taken along line a-a of the guide piece.
[FIG. 7] A cross-sectional view taken along line b-b of the guide piece, including surrounding elements.
[FIG. 8] A cross-sectional view taken along line c-c of the guide piece, including surrounding elements.
[FIG. 9] A longitudinal cross-sectional view illustrating the locking tongue in the released state and a longitudinal cross-sectional view illustrating the locking tongue in the locked state.
[FIG. 10] A cross-sectional view taken along line a-a of the guide piece according to a variation.

### EMBODIMENTS OF INVENTION

With reference to the attached drawings, the embodiments of the present invention will be described. In the drawings, items marked with the same reference numerals have the same or similar configurations. In the drawings, when multiple structures having the same or similar configurations exist, reference numerals are applied to some of them, and the use of reference numerals for others may be omitted to avoid unnecessary complexity.

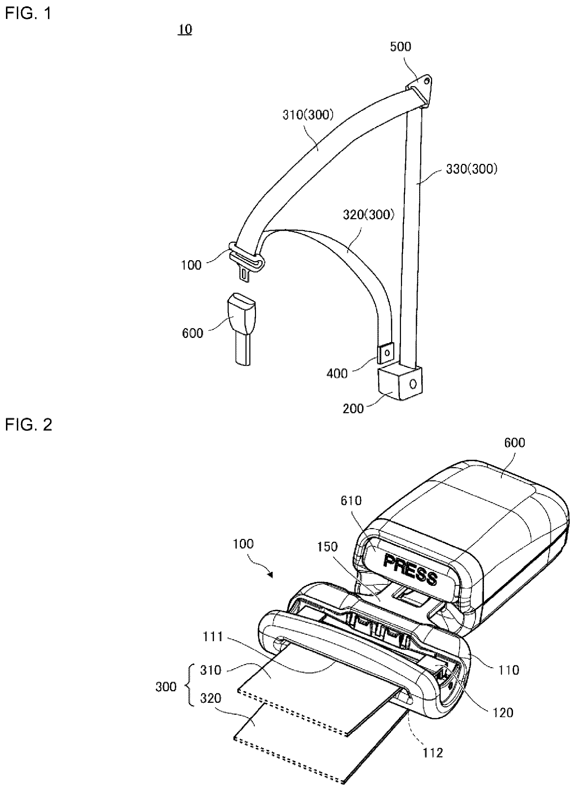

FIG. 1 is a perspective view schematically illustrating a seatbelt device 10 in the present embodiment. The seatbelt device 10 is primarily composed of a locking tongue 100, a retractor 200, webbing 300, a lap anchor 400, a shoulder anchor 500, and a buckle 600. The retractor 200 is attached to one side of the floor of the vehicle's seat (not illustrated). The retractor 200 is equipped with an inertia reel that has a biasing spring inside and winds up and stores one end of the webbing 300.

The webbing 300, drawn from the retractor 200, is divided into three sections: a shoulder belt 310, a lap belt 320, and a vertical belt 330. The shoulder belt 310 is the portion of the webbing 300 that is redirected by the shoulder anchor 500 and is diagonally worn across the occupant's chest. The lap belt 320 is the portion of the webbing 300 that extends laterally across the occupant's waist, with its end clamped by the lap anchor 400 and fixed to one side of the vehicle seat floor, in the same manner as the retractor 200. The vertical belt 330 is the portion of the webbing 300 that is drawn substantially vertically upward from the retractor 200 and continues to the point of insertion into the shoulder anchor 500.

The locking tongue 100 permits slidable insertion of the webbing 300 and divides the webbing into the shoulder belt 310 portion at the front and the lap belt 320 portion at the rear. The locking tongue 100 is detachably connected to the buckle 600, which is installed on the side of the seat opposite the retractor 200.

FIG. 2 is a perspective view illustrating a state in which the locking tongue 100 is connected to the buckle 600. However, to allow visibility of part of the internal structure of the locking tongue 100, the figure illustrates the state with the cover, which will be described later, removed.

As illustrated in the figure, the webbing 300 is inserted through a shoulder-side insertion hole 111 of a tongue body 110, folded back inside the tongue body 110, and drawn out through a waist-side insertion hole 112 (the direction may be reversed). The portion of the webbing 300 up to insertion into the shoulder-side insertion hole 111, as the first insertion hole, functions as the shoulder belt 310, while the portion drawn out from the waist-side insertion hole 112, as the second insertion hole, functions as the lap belt 320. The webbing 300 is restricted in its passage position in the width direction within the tongue body 110 by a guide piece 120 provided inside the tongue body 110. This will be described in detail later.

The locking tongue 100 includes a tongue plate 150 fixed to the tongue body 110, and when the tongue plate 150 is inserted into the buckle 600, it is fastened by a fastening mechanism provided inside the buckle 600. Additionally, when a press button 610 is pressed, the fastening is released, and the locking tongue 100 is detached from the buckle 600.

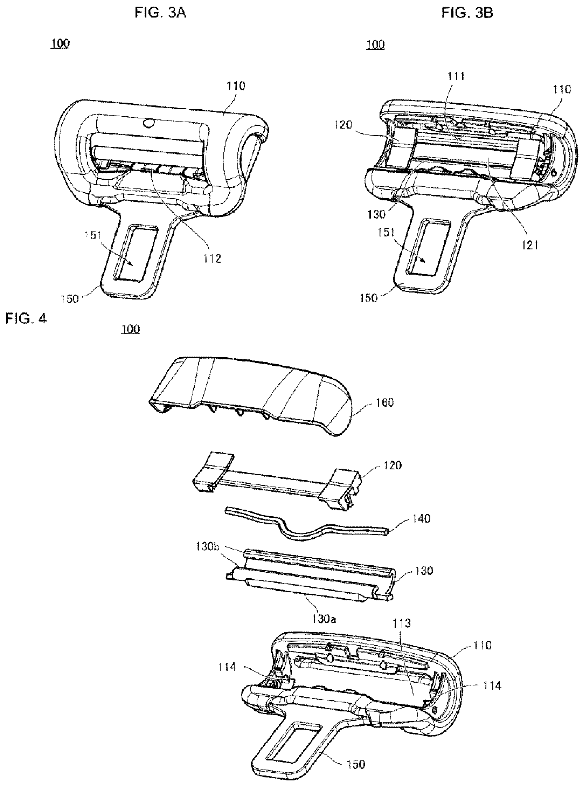

FIG. 3 is a front perspective view of the locking tongue (FIG. 3(A)) and a rear perspective view of the locking tongue (FIG. 3(B)). However, for the rear perspective view, the figure illustrates the state with the cover, which will be described later, removed to allow visibility of part of the internal structure of the locking tongue 100.

The tongue body 110 is molded from a molding resin, and the shoulder-side insertion hole 111 and the waist-side insertion hole 112, which are insertion holes for inserting the webbing 300, are provided to match the cross-sectional shape of the webbing 300. The tongue plate 150 is formed from a metal plate and is integrated with the tongue body 110, for example, through two-color molding. The tongue plate 150 is provided with an opening 151, and the opening portion 151 is fastened to the fastening mechanism of the buckle 600.

Inside the tongue body 110, the guide piece 120 and a locking component 130, which are used in combination, are housed. As will be described in detail later, these components are housed so that they can integrally move between a release position, which allows the movement of the webbing 300 away from the shoulder-side insertion hole 111, and a lock position, which prevents and further blocks the movement of the webbing 300 approaching the shoulder-side insertion hole 111.

FIG. 4 is an exploded perspective view of the main components of the locking tongue 100. The locking tongue 100 mainly includes the tongue body 110, the tongue plate 150, the locking component 130, a biasing spring 140, guide piece 120, and a cover 160. The tongue body 110 has a cross-section that forms a substantially U-shaped partial cylinder, having a central axis oriented in the width direction. A part of the inner curved surface, a curved guiding surface 113, contacts an outer curved surface 130a of the locking component 130 to support the locking component 130 and guide its displacement along the inner curved surface.

The locking component 130 is formed by bending a metal plate that has been punched out to a predetermined shape, and is mainly composed of the outer curved surface 130a that conforms to the curved guiding surface 113, and bent portions 130b that are bent so as to face each other from two longitudinal sides of the outer curved surface 130a. The biasing spring 140 is a spring member formed into a wire-like shape with a curved intermediate section. The biasing spring 140 is housed inside the locking component 130, with both ends extending from the locking component 130 and fixed to a spring support portion 114 provided on the tongue body 110. The locking component 130, under the action of the biasing spring 140, is normally positioned at the release position, away from the shoulder-side insertion hole 111.

The guide piece 120 is molded from resin and is fitted and attached to the locking component 130. As will be described in detail later, the guide piece 120 restricts the position through which the webbing 300 passes relative to the locking component 130. The cover 160 is molded from molding resin and covers an opening portion of the partial cylindrical shape of the tongue body 110, protecting the locking component 130 and the like disposed inside the tongue body 110.

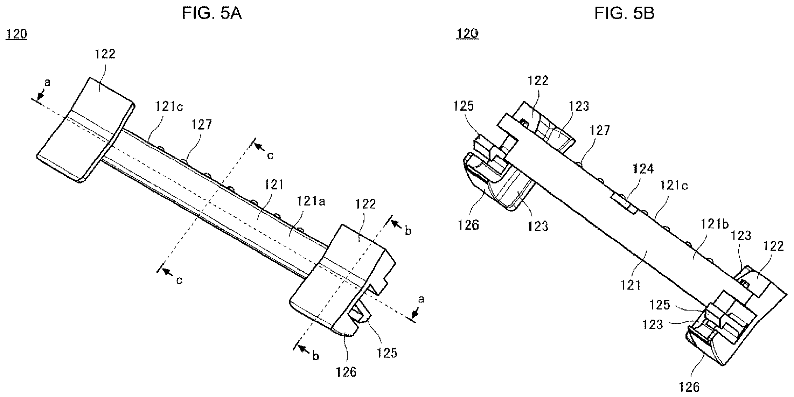

FIG. 5 is a front perspective view (FIG. 5(A)) and a rear perspective view (FIG. 5(B)) of the guide piece 120. The guide piece 120 primarily consists of a substantially flat portion 121 that is wider than the width of the webbing 300, and a sidewall portion 122 provided at both ends of the flat portion 121, forming an overall H-shaped structure. A front surface 121a of the flat portion 121 is the surface that comes into contact with and slides against the wide side of the webbing 300. A rear surface 121b of the flat portion 121 is the surface opposite to front surface 121a and faces the locking component 130, which is the component to which it is attached.

Near the center in the longitudinal direction of the rear surface 121b, and close to the end in the lateral direction, a guiding protrusion 124 extends outward from the rear surface 121b. The guiding protrusion 124 serves to guide the guide piece 120 to a predetermined position by coming into contact with a part of the locking component 130 when the guide piece 120 is attached onto the locking component 130. In addition, on one side of the longitudinal direction, a side surface 121c is provided with a plurality of semicylindrical crush ribs 127 that extend in the thickness direction of the flat portion 121 and run along the longitudinal direction. The crush ribs 127 function to ensure that the guide piece 120 is securely attached onto the locking component 130 by making contact and being pressed against at least a part of a fitting surface that fits with the locking component 130.

The sidewall portions 122 are provided to rise from each end of the flat portion 121 and function to regulate the lateral movement of the webbing 300 sliding on the flat portion 121. Protruding portions 123 are provided protruding from the respective sidewall portions 122 so as to face each other, and serve to regulate the webbing 300 so as not to be spaced apart from the flat portion 121 by more than a predetermined distance. A snap fit 125 is provided to protrude from each end in the longitudinal direction on the rear surface side of the flat portion 121. The snap fit 125 fastens to the bent portion 130b of the locking component 130, facilitating the attachment of the guide piece 120 to the locking component 130. A guiding cover 126 is provided on each sidewall portion 122 and, when the guide piece 120 is attached onto the locking component 130, has a curved surface that partially continues from the outer curved surface 130a of the locking component 130.

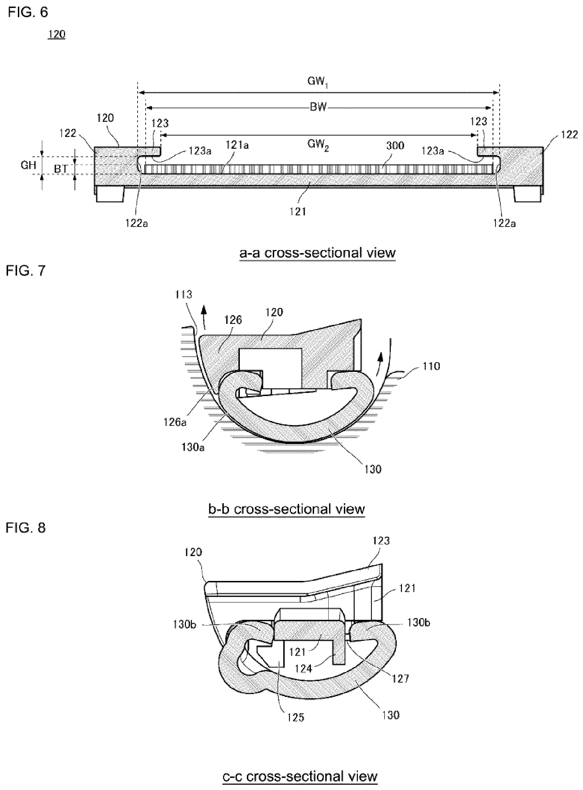

FIG. 6 is a sectional view taken along line a-a illustrated in FIG. 5(A) of the guide piece 120. However, the cross-section of the webbing 300 sliding on the flat portion 121 is also depicted.

As described above, the guide piece 120 regulates the lateral movement of the webbing 300 sliding on the flat portion 121 through the sidewall portions 122. In the present embodiment, the width of the webbing 300 is denoted as BW (mm), and the distance between the sidewall surfaces 122a of the sidewall portions 122 is denoted as GW₁ (mm), with the design ensuring that GW₁ ≧ BW + 1.0 is satisfied. By providing an allowance of approximately 1.0 mm in the width direction, this facilitates the smooth unwinding of the webbing 300 during normal use. In addition, in the present embodiment, the distance between the tips of the opposing protruding portion 123 is denoted as GW₂ (mm), and the design ensures that BW - 3.0 ≧ GW₂ is satisfied. Protruding the protruding portion 123 in this way prevents the webbing 300 from coming out of the guide piece 120 during use.

Furthermore, in the present embodiment, the thickness of the webbing 300 is denoted as BT (mm), and the height from the front surface 121a of the flat portion 121 to the protruding bottom surface 123a of the protruding portion 123 is denoted as GH (mm), with the design ensuring that BT × 2.5 > GH ≧ BT × 1.2 is satisfied. By restricting the height of GH in this way, it becomes possible to achieve both ease of inserting the webbing 300 into the guide piece 120 during manufacturing and preventing the webbing 300 from bending even when it is skewed during use.

FIG. 7 is a cross-sectional view taken along line b-b illustrated in FIG. 5(A) of the guide piece 120. However, in the state where the guide piece 120 is attached to the locking component 130 and housed inside the tongue body 110, the cross-section of the locking component 130 and a part of the cross-section of the curved guiding surface 113 of the tongue body 110 are also shown.

The guide piece 120 and the locking component 130 are housed inside the tongue body 110 so that they can be displaced to rotate along the curved guiding surface 113. At this time, a cover surface 126a of the guiding cover 126 provided on the guide piece 120 is continuous with the outer curved surface 130a of the locking component 130, and smoothly contacts the curved guiding surface 113 when the guide piece 120 and the locking component 130 are displaced integrally. Therefore, the guide piece 120 and the locking component 130 can stably move between the release position and the lock position inside the tongue body 110.

FIG. 8 is a cross-sectional view taken along line c-c of the guide piece 120 illustrated in FIG. 5(A). However, in the state where the guide piece 120 is attached to the locking component 130, the cross-section of the locking component 130 is also shown.

During the attachment of the guide piece 120 to the locking component 130, the snap fit 125 is first engaged with one side of the bent portion 130b (on the left side of the figure). Next, the tip of the guiding protrusion 124 is pressed against the other bent portion 130b (the right side in the figure), and the flat portion 121 is pushed in so that the guide projection 124 slides against the bent portion 130b. After being pushed in to some extent, the crush rib 127 contacts the corresponding bent portion 130b, and as the flat portion 121 is further pushed in, the crush rib 127 is compressed, causing the guide piece 120 to be firmly attached to the locking component 130. When attached in this way, the position through which the webbing 300 moving on the flat portion 121 during use passes is restricted with respect to the locking component 130. That is, even when the webbing 300 is pulled out in an oblique direction, it does not come into contact with the sides of the locking component 130, the inner side surfaces of the tongue body 110, or the like. Therefore, unexpected wear does not cause fraying of the webbing fibers, allowing a consistent appearance to be maintained.

In the present embodiment, as illustrated in the figure, the protruding portion 123 is inclined so that the side on the shoulder-side insertion hole 111 is higher than the center portion. By adopting such a configuration, it reduces the likelihood of resistance or snagging during the unwinding of the webbing 300.

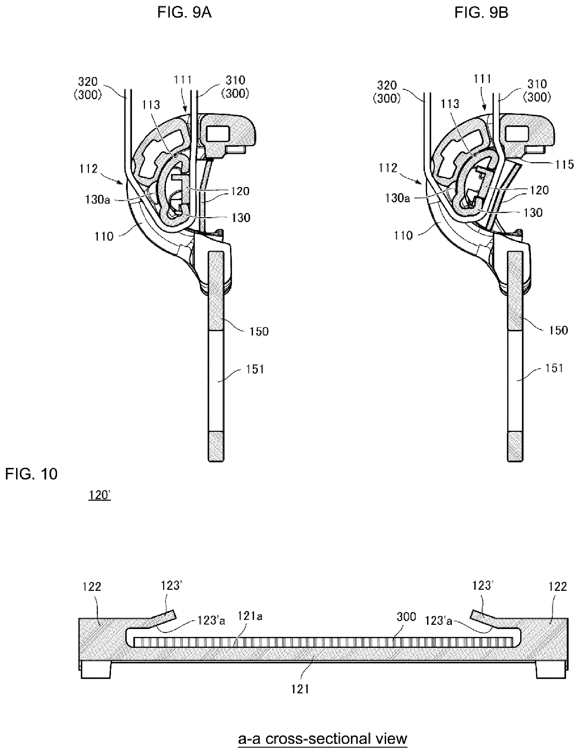

FIG. 9 includes a longitudinal sectional view of the locking tongue in the release state (FIG. 9(A)) and a longitudinal sectional view of the locking tongue in the locked state (FIG. 9(B)). As illustrated in FIG. 9(A), in the release state, the locking component 130 is located, together with the guide piece 120, at a position away from the shoulder-side insertion hole 111. In this state, the webbing 300 can move without any obstruction, whether moving from the shoulder-side insertion hole 111 toward the guide piece 120 or from the guide piece 120 toward the shoulder-side insertion hole 111. Therefore, the occupant is able to smoothly operate the webbing 300, whether the webbing 300 is extended to loosen the lap belt 320 side or the shoulder belt 310 side.

When the webbing 300 is pulled with a force exceeding the biasing force of the biasing spring 140, such as during a vehicle collision, the webbing 300 pushes up the locking component 130. Then, the outer curved surface 130a of the locking component 130 slides along the curved guiding surface 113 of the tongue body 110, and as illustrated in FIG. 9(B), the locking component 130 moves together with the guide piece 120 toward the shoulder-side insertion hole 111. Then, the locking component 130 presses the webbing 300 toward the contacting portion 115 of the tongue body 110, and the movement of the webbing 300 is hindered by this pressing force, resulting in the locked state.

Thus, the seatbelt device 10 according to the present embodiment has been described, but the specific shapes of the respective elements illustrated in each figure can be appropriately modified within a range that does not impair their respective functions. For example, the guide piece 120 can be modified as follows.

FIG. 10 is a sectional view taken along line a-a of FIG. 6, showing a guide piece 120' according to a variation. In the figure, components with the same configuration as in the above embodiment are assigned the same reference numerals, and the description thereof is omitted.

The guide piece 120' has a modified protruding portion 123' compared to the guide piece 120. Specifically, the protruding portion 123' has a height from the front surface 121a to the protruding bottom surface 123'a on the open side that is higher than the height from the front surface 121a to the protruding bottom surface 123'a on the side of the sidewall portion 122. That is, each protruding portion 123' is widely opened in the direction facing each other. By configuring it this way, the process of inserting the webbing 300 into the guide piece 120' during manufacturing becomes easier.

In the above embodiment, the sidewall portion 122 are provided at both ends of the flat portion 121 to regulate the movement of the webbing 300 in the width direction and restrict the position through which it passes; however, other structures besides the sidewalls portion 122 may be used to restrict the position through which the webbing 300 passes. For example, the position through which the webbing 300 passes can be restricted by arranging a plurality of columnar protrusions.

### DESCRIPTION OF REFERENCE NUMERALS

10...seatbelt device, 100...locking tongue, 110...tongue body, 111...shoulder-side insertion hole, 112...waist-side insertion hole, 113...curved guiding surface, 114...spring support portion, 115...contacting portion, 120, 120'...guide piece, 121...flat portion, 121a...front surface, 121b...rear surface, 121c...side surface, 122...sidewall portion, 122a...sidewall surface, 123, 123'...protruding portion, 123a, 123'a...protruding bottom surface, 124...guiding protrusion, 125...snap fit, 126...guiding cover, 126a...cover surface, 127...crush rib, 130...locking component, 130a...outer curved surface, 130b...bent portion, 140...biasing spring, 150...tongue plate, 151...opening portion, 160...cover, 200...retractor, 300...webbing, 310...shoulder belt, 320...lap belt, 330...vertical belt. 400...lap anchor, 500...shoulder anchor, 600...buckle, 610...press button

## Claims

1. A locking tongue comprising:
a tongue body having a first insertion hole and a second insertion hole for inserting a webbing, and a tongue plate for detachably connecting to a buckle;
a locking component that is supported so as to be displaceable between a release position, which allows movement of the webbing away from the first insertion hole, and a lock position, which prevents movement of the webbing approaching the first insertion hole;
and a guide piece attached to the locking component that restricts a position through which the webbing passes relative to the locking component.

2. The locking tongue according to claim 1, wherein the guide piece comprises: a flat portion configured to receive contact from a wide surface of the webbing; and sidewall portions provided respectively at both ends of the flat portion, and restricting movement of the webbing in a widthwise direction.

3. The locking tongue according to claim 2, wherein the guide piece comprises a protruding portion protruding from the sidewall portion, the protruding portion restricting the webbing from separating from the flat portion by more than a predetermined distance.

4. The locking tongue according to claim 3, wherein a height from the flat portion to a lower surface of the protruding portion on an open side is greater than a height from the flat portion to the lower surface of the protruding portion on a side of the sidewall portion.

5. The locking tongue according to claim 3, wherein a height from the flat portion to a lower surface of the protruding portion on a side of the sidewall portion is not less than 1.2 times and less than 2.5 times a thickness of the webbing to be inserted.

6. The locking tongue according to claim 2, wherein the guide piece comprises a guide portion that extends from a rear surface of the flat portion opposite to a front surface that receives contact from the wide surface, and contacts a part of the locking component when attached to the locking component to guide the guide piece to a predetermined position.

7. The locking tongue according to claim 1, wherein:
the locking component is formed of a metal material;
the guide piece is formed of a resin material; and
the guide piece comprises a plurality of ribs on at least a part of a fitting surface that fits with the locking component, wherein the ribs are configured to contact the locking component.
